# EUROPEAN PATENT APPLICATION

(11) **EP 1 463 236 A2**
(43) Date of publication of application: **29.09.2004**
(21) Application number: 04001020.9
(22) Date of filing: 19.01.2004
(51) Int. Cl.: H04L 12/24

(54) **Information processing apparatus including network connection diagnostic method**

(30) Priority: 30.01.2003 JP 2003022153
(71) Applicant: Kabushiki Kaisha Toshiba, Tokyo (JP)
(72) Inventor: Watanabe, Hiroyuki, 1-chome Minato-ku Tokyo 105-8001 (JP); Taki, Makoto, 1-chome Minato-ku Tokyo 105-8001 (JP)
(74) Representative: Henkel, Feiler & Hänzel

(57) **Abstract**

An information processing apparatus includes a network device (107, 108) configured to be connectable to a network. The apparatus further includes a unit which displays a connection diagram showing a connection between the network device (107, 108) and the network on a display device (121) of the information processing apparatus, a unit which performs a diagnosis of a network connection of the network device (107, 108), a unit which displays a portion of the network connection where a problem of the network connection is detected by the diagnosis, on the connection diagram, and a unit which displays a message to indicate a solution to the detected problem on the display device (121).

## Description

The present invention relates to an information processing apparatus such as a personal computer and a network connection diagnostic method used in the same apparatus.

An information processing apparatus such as a personal computer generally includes a network device such as a wired LAN device. The network device is used to connect the computer with a network such as the Internet. This connection allows the computer to acquire information from another computer on the network and share information with another computer thereon.

Most personal computers have an operating system for supporting a network connecting function. A user can easily connect a computer with a network such as the Internet even though he or she has no expertise in networks. If, however, the user faces the problem that the computer cannot be connected to a network, he or she needs to have expertise to solve the problem. It is very difficult for general users to find where and what the problem of the computer is.

Jpn. Pat. Appln. KOKAI Publication No. 6-103200 discloses a network management system for automatically detecting a failure occurring in each of terminals and network devices in a network. The network management system allows a network administrator to be notified of a terminal or a network device in which a failure has occurred. However, this system is configured on the precondition that it supports administrative tasks of the network administrator and does not resolve a problem of network connection caused in a user's personal computer.

It is thus demanded that a new function should be fulfilled to provide a user with a hint on a solution of problems of networks caused in user's personal computer.

An object of the present invention is to provide an information processing apparatus and a network connection diagnostic method capable of easily solving problems of network connection.

According to an embodiment of the present invention, there is provided an information processing apparatus including a network device configured to be connectable to a network, the apparatus comprising: means for displaying a connection diagram showing a connection between the network device and the network on a display device of the information processing apparatus; means for performing a diagnosis of a network connection of the network device; means for displaying a portion of the network connection where a problem of the network connection is detected by the diagnosis on the connection diagram; and means for displaying a message to indicate a solution to the detected problem on the display device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an external view of a computer according to an embodiment of the present invention, the display of which is open.
FIG. 2 is a block diagram showing a system configuration of the computer according to the embodiment of the present invention.
FIG. 3 is an illustration of an example of a network diagnostic window used in the computer according to the embodiment of the present invention.
FIG. 4 is an illustration of an example of status information displayed on the network diagnostic window shown in FIG. 3.
FIG. 5 is an illustration of an example of a diagnostic result window displayed on the network diagnostic window shown in FIG. 3.
FIG. 6 is a flowchart showing a procedure executed by the computer according to the embodiment of the present invention.
FIG. 7 is an illustration of an example of a structure of a status database used in the computer according to the embodiment of the present invention.
FIG. 8 is a flowchart showing a procedure for network connection diagnosis executed by the computer according to the embodiment of the present invention.

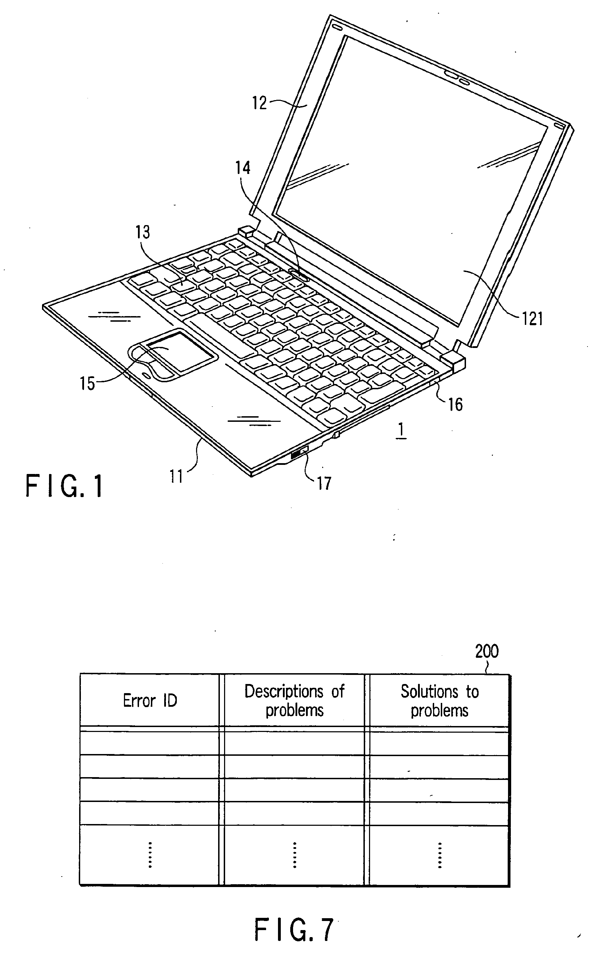

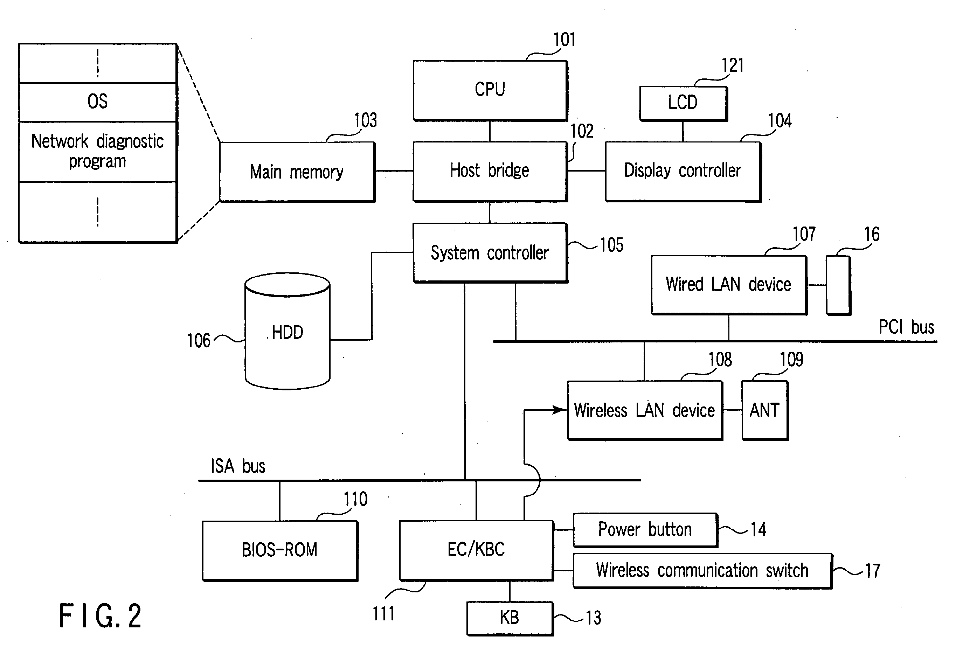

An embodiment of the present invention will now be described with reference to the drawings. Referring first to FIGS. 1 and 2, the configuration of an information processing apparatus according to an embodiment of the present invention will be described. The information processing apparatus is implemented as, for example, a notebook-type personal computer.

FIG. 1 is a front view of a notebook-type personal computer whose display unit is open. As shown in FIG. 1, a personal computer 1 comprises a main body 11 and a display unit 12. The main body 11 includes a wired network device and a wireless network device.

The display unit 12 incorporates a display device 121 that is formed of an LCD (liquid crystal display). The LCD 121 is located in nearly the central part of the display unit 12.

The display unit 12 hinges on the main body 11 such that it can freely turn between its open position and closed position. The main body 11 is a thin box-type housing. The main body 11 has a keyboard 13, a power button 14 and a touch pad 15 on its top. The power button 14 is used to turn on/off the computer 1.

The main body 11 also has a LAN connector 16 and a wireless communication switch 17 on its side. A wired LAN cable is detachably connected to the LAN connector 16.

The wireless communication switch 17 is an operation switch for switching the wireless network device in the main body 11 between operating and nonoperating states. The switch 17 is implemented as, for example, a slide switch that moves between ON and OFF positions. When the switch 17 is set to the ON position, the wireless network device is operating. When the switch 17 is set to the OFF position, the wireless network device is not operating.

The wireless network device radiates electromagnetic wave during the operating state, and not during the nonoperating state. When the user carries the computer 1 into a place (e.g., a hospital and an airplane) where electromagnetic wave is prevented from being radiated, he or she has only to turn off the wireless communication switch 17 to easily switch the wireless network device from the operating state to the nonoperating state.

The system configuration of the computer 1 will now be described with reference to FIG. 2.

Referring to FIG. 2, the computer 1 comprises a CPU 101, a host bridge 102, a main memory 103, a display controller 104, a system controller 105, a hard disk drive (HDD) 106, a wired LAN device 107, a wireless LAN device 108, a BIOS-ROM 110 and an embedded controller/keyboard controller IC (EC/KBC) 111.

The CPU 101 is a processor for controlling the operation of the computer 1. The CPU 101 executes an operating system (OS) loaded into the main memory 103 from the HDD 106 and various application/utility programs. The CPU 101 also executes a BIOS (basic input output system) stored in the BIOS-ROM 110.

A network diagnostic program is installed in advance in the computer 1 as one of utility programs. This program provides a user with a hint on a solution of problems of wired or wireless network connection caused in the computer 1. The network diagnostic program makes a diagnosis of network connection and displays its diagnostic result on the LCD 121. It is the wired LAN device 107 and wireless LAN device 108 that are targeted for diagnosis.

The host bridge 102 is a bridge device that connects a local bus of the CPU 101 with the system controller 105. The host bridge 102 includes a memory controller that access-controls the main memory 103. The display controller 104 controls the LCD 121 used as a display monitor of the computer 1.

The system controller 105 controls each of devices on a PCI (Peripheral Component Interconnect) bus and an ISA (Industry Standard Architecture) bus. The controller 105 includes an IDE (Integrated Drive Electronics) controller for controlling the HDD 106.

The wired LAN device 107 is a wired network device that is connected to a wired network. The device 107 communicates with the wired network such as wired LAN, via the wired LAN cable connected to the LAN connector 16. The wireless LAN device 108 is a wireless network device that is connected to a wireless network. The device 108 includes a baseband unit and an RF (Radio Frequency) unit. The RF unit transmits/receives a radio signal through an antenna (ANT) 109. The device 108 performs wireless communication according to, for example, IEEE 802.11a / IEEE 802.11b standard.

The embedded controller/keyboard controller IC (EC/KBC) 111 is a one-chip microcomputer on which an embedded controller for performing a power management of the computer 1 and a keyboard controller for controlling the keyboard 13 are integrated. The controller IC 111 powers on/off the computer 1 in accordance with a user's operation of the power button 14. Furthermore, the controller IC 111 switches the wireless LAN device 108 between the operating and nonoperating states in accordance with a user's ON/OFF operation of the wireless communication switch 17.

The principal functions fulfilled by the network diagnostic program will be described below.

### Network Device Connection Display Function:

The network device connection display function is to display on the LCD 21 a connection diagram schematically showing a connection between a network device and a network. More specifically, the network diagnostic program displays on the LCD 21 a connection diagram showing a network connection of each of the wired and wireless LAN devices 107 and 108. The connection diagram shows not the actual physical network structure but an image of a logical network connection of each of the devices 107 and 108 in such a manner that a user can understand a connection configuration by intuition.

### Network Connection Diagnostic Function:

The network connection diagnostic function is to make a diagnosis of network connection of a network device. More specifically, the network diagnostic program makes a diagnosis of network connection of each of the wired and wireless LAN devices 107 and 108. If a problem (an error) is detected by the diagnosis, the network diagnostic program displays, for example, an exclamation point "!" on that portion of the network connection where the problem occurs.

### Solution Display Function:

The solution display function is to indicate solutions of a detected problem to a user. If a user selects an exclamation point "!", the network diagnostic program displays a message about solutions of a problem corresponding to the exclamation point on the LCD 121.

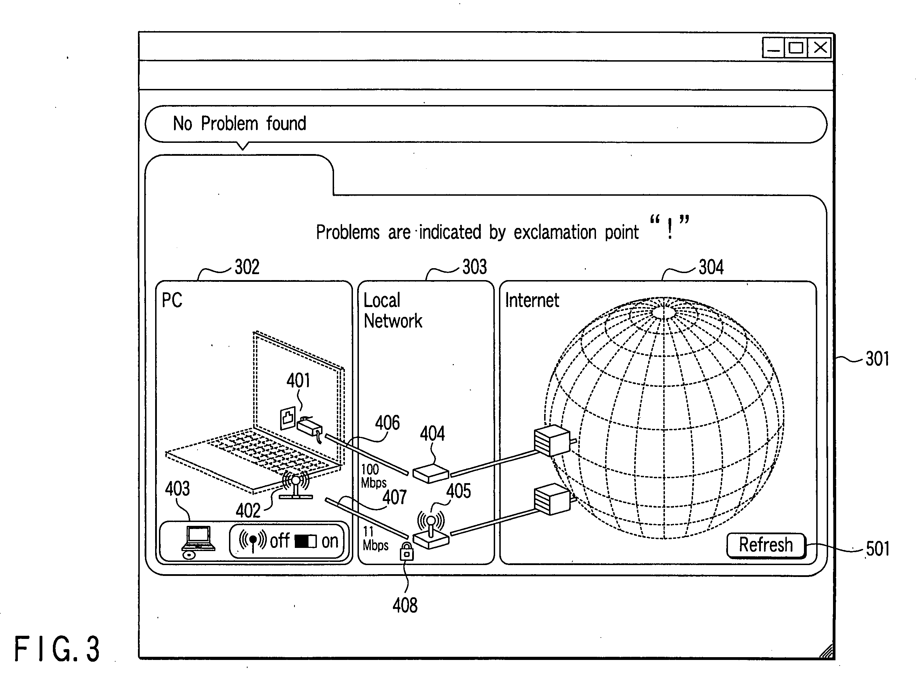

FIG. 3 shows a network diagnostic window 301 displayed on the LCD 121 by the network diagnostic program. When the network diagnostic program starts, it displays the window 301 shown in FIG. 3 on the LCD 121. The window 301 displays a connection diagram.

The network diagnostic window 301 displays a connection configuration indicative of a network connection of each of the wired and wireless devices 107 and 108, and the current status each of the wired and wireless devices 107 and 108. Three display areas 302, 303 and 304 corresponding to the computer 1, a local network and the Internet, respectively are displayed on the network diagnostic window 301. The three display areas 302, 303 and 304 display a connection diagram of the network connection of each of the devices 107 and 108.

The display area 302 displays three icons 401, 402 and 403. These icons 401, 402 and 403 represent the wired LAN device 107, wireless LAN device 108 and wireless communication switch 17, respectively.

The display area 303 displays two icons 404 and 405. The icon 404 represents a wired network device (e.g., bridge) that exists within the local network. The icon 405 represents a wireless network device (e.g., wireless access point) that exists within the local network.

A solid line 406 is displayed between the icon 401 corresponding to the wired LAN device 107 and the icon 404 corresponding to the bridge. The solid line 406 indicates a communication path between the wired LAN device 107 and wired LAN. If connection between the device 107 and wired LAN is established, the maximum link speed (e.g., 100 Mbps) corresponding to the device 107 is displayed on the solid line 406 as the status of the device 107.

A solid line 407 is displayed between the icon 402 corresponding to the wireless LAN device 108 and the icon 405 corresponding to the access point. The solid line 407 indicates a communication path between the wireless LAN device 108 and wireless LAN. If wireless connection between the device 108 and wireless LAN is established, the maximum link speed (e.g., 11 Mbps) corresponding to the device 108 is displayed on the solid line 407 as the status of the device 108.

A key icon 408 represents that encryption key such as a WEP (wired equivalent privacy) key is set in the wireless LAN device 108. If the encryption key is set in the wireless LAN device 108, encrypted data is transferred between the wireless LAN device 108 and the access point. Only when the encryption key is set in the wireless LAN device 108, the network diagnostic program displays the icon 408 on the network diagnostic window 301 as the status of the wireless LAN device 108.

The network diagnostic program periodically and automatically refreshes the status of each of the devices 107 and 108, which is displayed on the network diagnostic window 301. If a user clicks a "Refresh" button 501, the network diagnostic program displays the latest status on the window 301. at once.

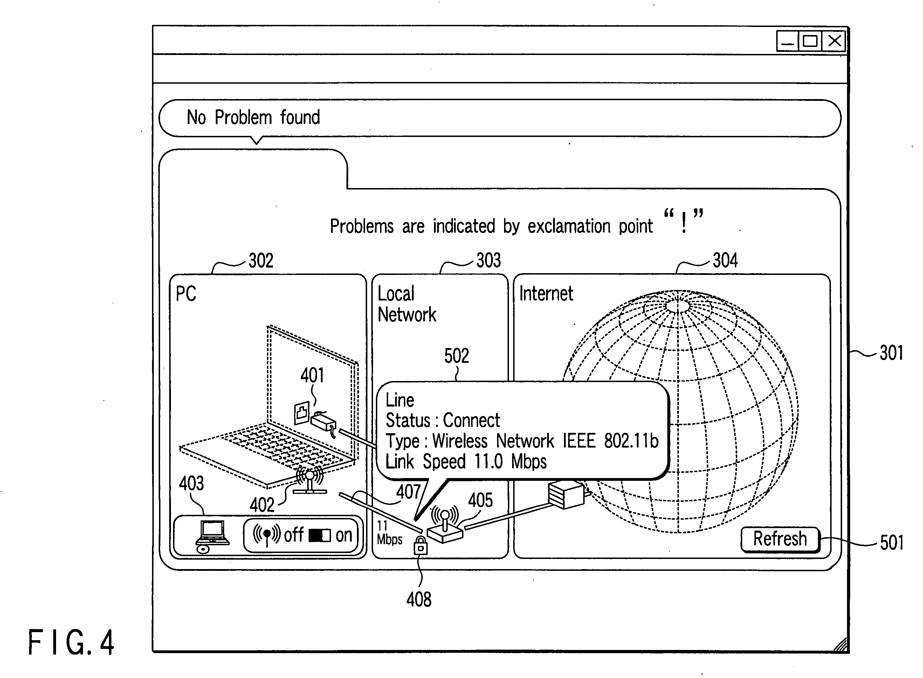

The network diagnostic program also has a function of displaying detailed status information of a network device designated by a mouse cursor on the network diagnostic window 301. If a user moves the mouse cursor onto the solid line 407, the network diagnostic program displays a balloon 502 indicative of detailed status information about the current wireless communication on the window 301 as illustrated in FIG. 4. The balloon 502 displays the status of wireless connection between the wireless LAN device 108 and the access point within the wireless network. If a wireless connection is established between them, the balloon 502 displays a "line status = connect" ("status = connect" represents that the wireless connection is established). The balloon 502 also displays the type of a wireless LAN and the maximum link speed of wireless communication of the wireless LAN.

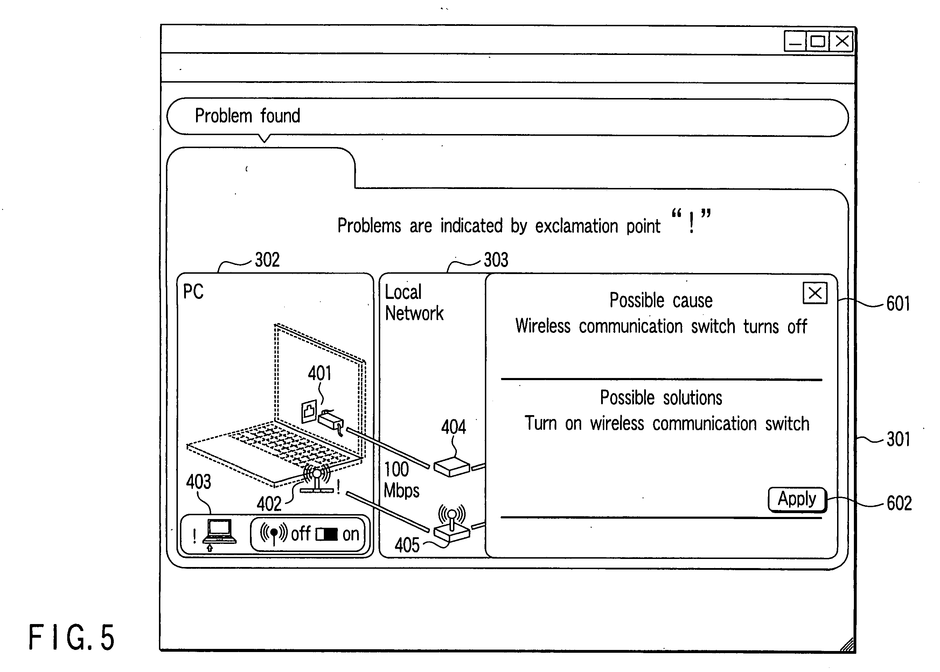

When the network diagnostic program detects a problem of network connection of the wired LAN device 107 or the wireless LAN device 108, it displays an exclamation point "!" on that portion of a network connection where the problem is detected. If no wireless connection can be established between the wireless LAN device 108 and the wireless network due to the OFF state of the wireless communication switch 17, the network diagnostic program displays an exclamation point "!" on the icon 403 on the network diagnostic window 301, which represents the wireless communication switch 17, as shown in FIG. 5. A user can thus know that a problem has occurred in the wireless communication switch 17.

When the user clicks the exclamation point "!" on the icon 403, the network diagnostic program displays a diagnostic result window 601 on the network diagnostic window 301 as illustrated in FIG. 5. The window 601 displays both a message to indicate explanations of the problem corresponding to the exclamation point "!" selected by the user's click and a message to indicate solutions of the problem. If no wireless connection can be established between the wireless LAN device 108 and the wireless network due to the OFF state of the wireless communication switch 17, the network diagnostic program displays a message "Wireless communication switch is off" and a message "Please turn on wireless communication switch" on the diagnostic result window 601.

The window 601 also displays an "Apply" button 602. The "Apply" button 602 instructs the network diagnostic program to execute a process corresponding to the solutions displayed on the window 601.

If no wireless connection can be established between the wireless LAN device 108 and the wireless network due to the OFF state of the wireless communication switch 17, the "Apply" button 602 is used to instruct the network diagnostic program to execute a process for switching the device 108 from the nonoperating state to the operating state. When the user clicks the "Apply" button 602, the network diagnostic program controls the controller IC 111 to switch the device 108 to the operating state.

If a problem that the wired LAN device 107 and the wired network cannot be connected to each other is detected though the LAN cable is connected to the LAN connector 16, the network diagnostic program displays both a message to initialize (refresh) the wired LAN device 107 and the "Apply" button 602 for initializing the device 107 on the diagnostic result window 601 as solutions to the problem. When the user clicks the "Apply" button 602, the network diagnostic program initializes (refreshes) the wired LAN device 107 using a device driver for controlling the device 107.

If a problem that the wireless LAN device 108 and wireless network cannot be connected to each other is detected though the wireless communication switch 17 turns on, the network diagnostic program displays both a message to initialize (refresh) the wireless LAN device 108 and the "Apply" button 602 for initializing the device 108 on the diagnostic result window 601 as solutions to the problem. When the user clicks the "Apply" button 602, the network diagnostic program initializes (refreshes) the wireless LAN device 108 using a device driver for controlling the device 108.

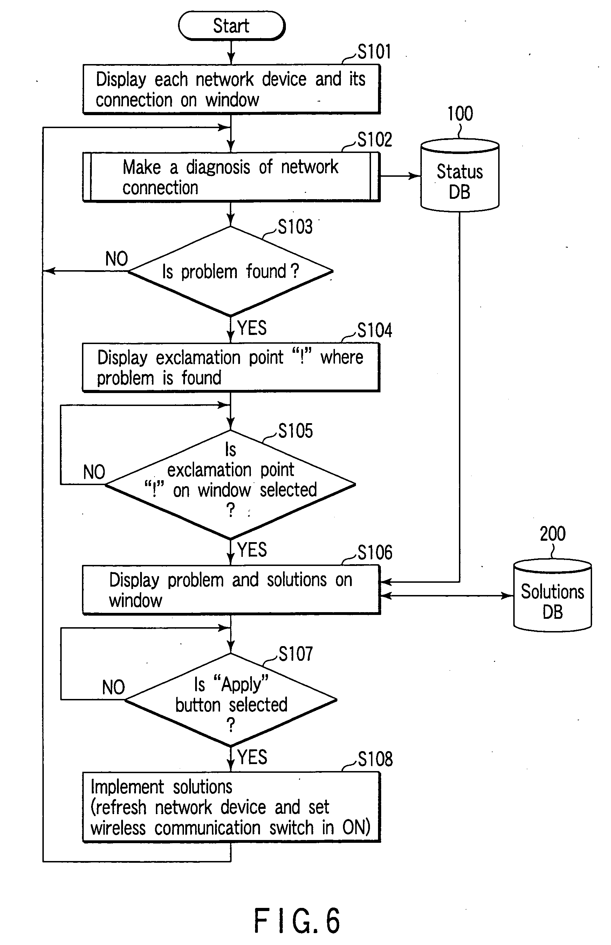

A procedure taken by the network diagnostic program when the CPU 101 executes the network diagnostic program will now be described with reference to the flowchart shown in FIG. 6.

When the network diagnostic program starts, it displays each of the network devices (wired LAN device 107 and wireless LAN device 108) provided in the computer 1 and a network diagnostic window 301 showing a network connection of each of the network devices (step S101). The network diagnostic program starts to make a diagnosis of network connection of each of the network devices (step S102).

In the network connection diagnosis, the network diagnostic program executes a process to determine whether a network connection is established for each of the network devices. As for the wireless LAN device 108, the network diagnostic program performs a process of checking whether the wireless communication switch 17 turns on or off and a process of determining whether the WEP key is set or not. As for the wired LAN device 107, the network diagnostic program performs a process of determining whether a LAN cable is connected to the LAN connector 16 by detecting a voltage of a specific pin of the LAN connector 16.

If the network connection is established, then the network diagnostic program performs a process of determining whether an IP address is obtained or not and a process of determining whether the computer 1 can communicate with remote hosts (default gateway, DNS (domain name system) server, proxy server, DHCP (dynamic host configuration protocol) server, etc.)

As a result of the network connection diagnosis, the current status of network connection of each network device is detected and a problem that occurs in the network connection is detected. Status information indicative of the diagnostic result is stored in a status database 100. Status information also includes error identification information (error ID) for identifying the detected problem.

When a problem of network connection is detected by the network connection diagnosis (YES in step S103), the network diagnostic program displays an exclamation point "!" on that portion of the connection where the problem is detected (step S104). If a problem of network connection is detected in the wired LAN device 107, the network diagnostic program displays an exclamation point "!" on the icon 401 on the network diagnostic window 301, which represents the wired LAN device 107. If a problem of network connection is detected in the wireless LAN device 108, the network diagnostic program displays an exclamation point "!" on the icon 402 on the network diagnostic window 301, which represents the wireless LAN device 108. As for the wireless LAN device 108, if a problem due to the OFF state of the wireless communication switch 17 is detected, the network diagnostic program displays an exclamation point "!" on the icon 403 on the network diagnostic window 301, which represents the wireless communication switch 17. As for the wired LAN device 107, if a problem due to a disconnection of the LAN cable to the LAN connector 16 is detected, the network diagnostic program displays an exclamation point "!" on the solid line 406.

Moreover, if it is detected that the computer cannot communicate with a remote host though a connection is established between a wired/wireless network device and a wired/wireless local network, an exclamation point "!" can be displayed on the area 303 that indicates a local network area.

When an exclamation point "!" on the network diagnostic window 301 is selected by click operation of the mouse (YES in step S105), the network diagnostic program displays the diagnostic result window 601, which shows both explanations of a problem corresponding to the selected exclamation point "!" and solutions of the problem, on the network diagnostic window 301 (step S106).

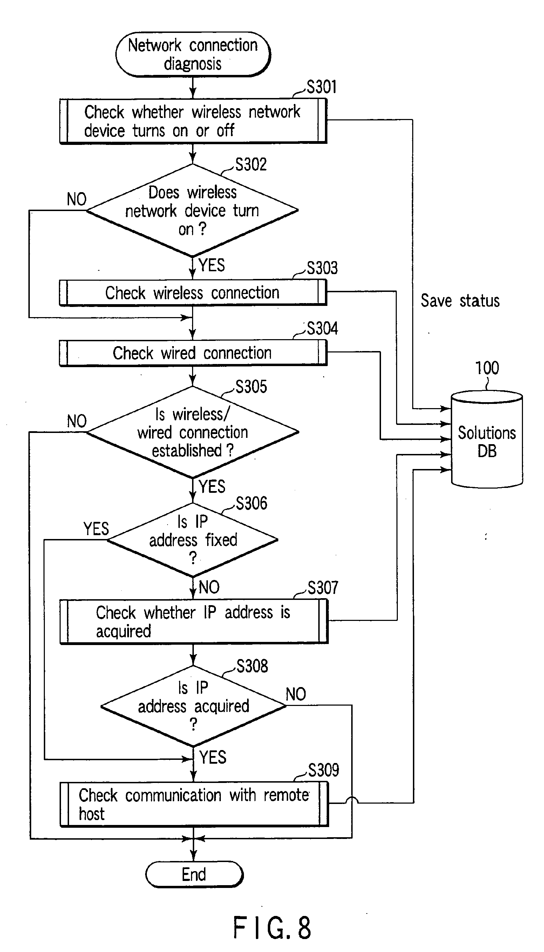

In step S106, the explanations and solutions to be displayed on the window 601 are retrieved from a solution database 200. The solution database 200 stores information of solutions to a plurality of problems that are expected regarding a network connection of each of the wired LAN device 107 and wireless LAN device 108. FIG. 7 shows an example of a format of the information stored in the solution database 200. As shown in FIG. 7, information indicative of explanations of a problem (e.g., the cause of the problem) designated by an error ID and information indicative of solutions to the problem designated by the error ID are defined in the solution database 200. The network diagnostic program acquires an error ID corresponding to the selected exclamation point "!" from the status database 100 and retrieves the explanations of a problem corresponding to the acquired error ID and the solutions of the problem from the database 200.

When a solution to the problem lies in initializing a network device (wired LAN device 107 or wireless LAN device 108) or in turning on the wireless communication switch 17 (sets the wireless LAN device 108 in the operating state), the network diagnostic program displays an "APPLY" button 602 for the solutions on the diagnostic result window 601. If a user clicks the "APPLY" button 602 (YES in step S107), the network diagnostic program executes a process (initialization of the wired/wireless LAN device and setting of the wireless LAN device in the operating state) corresponding to the solutions on the window 601 (step S108).

An example of a procedure for the network connection diagnosis performed in step S102 shown in FIG. 6 will now be described with reference to the flowchart shown in FIG. 8.

First, the network diagnostic program determines whether the wireless communication switch 17 turns on or off, or whether the wireless LAN device 108 operates or does not operate, and stores status information indicative of the determination result in the status database 100 (step S301).

If the wireless LAN device 108 operates (YES in step S302), the network diagnostic program acquires the current connection status of the wireless LAN device 108 from the wireless LAN device 108 or the device driver for controlling the device 108. The program therefore determines whether a physical wireless connection (link) is established between the wireless LAN device 108 and the wireless network, and stores status information indicative of the determination result in the status database 100 (step S303). The status database 100 stores status information indicating the determination result.

Then, the network diagnostic program checks a connection state between the wired LAN device 107 and the wired network (step S304). In step S304, the network diagnostic program first determines whether the wired LAN cable is connected to the LAN connector 16 and stores status information indicative of the determination result in the status database 100. If the wired LAN cable is connected to the LAN connector 16, the network diagnostic program acquires the current connection status of the wired LAN device 107 from the wired LAN device 107 or the device driver for controlling the device 107. The program thus determines whether a physical connection (link) is established between the wired LAN device 107 and the wired network, and stores status information indicative of the determination result in the status database 100.

After that, the network diagnostic program determines whether each of the wired and wireless LAN devices 107 and 108 in which a link is established can acquire an IP address from the DHCP server, and stores status information indicative of the determination result in the status database 100 (step S307). When a fixed IP address is assigned to the wired/wireless LAN device in which a link has been established, the step S307 is skipped.

When the wired/wireless LAN device in which a link has been established can acquire an IP address (YES in step S308) or when a fixed IP address is assigned to the wired/wireless LAN device in which a link has been established (YES in step S306), the network diagnostic program determines whether the computer can communicate with the remote hosts (default gateway, DNS server, DHCP server proxy server, etc.) and then stores status information indicative of the determination result in the status database 100 (step S309).

In step S309, the network diagnostic program determines whether the computer 1 can communicate with each remote host,' using, e.g., a PING command. The IP address of each remote host is registered in advance in the computer 1. The network diagnostic program transmits a packet (echo command of ICMP = Internet Control Message Protocol) to the IP address for each remote host. It is thus possible to determine whether the computer can communicate with the remote host according to whether a reply to the packet is sent or not.

According to the embodiment described above, when a problem of network connection in each of the wired and wireless LAN devices 107 and 108 is detected, a portion of the network connection where the problem occurs is displayed on the network diagnostic window 301. Further, a message about solutions to the problem is displayed on the network diagnostic window 301. A user can thus be provided with a hint on a solution to the problem of network connection. The user can easily solves the problem even though he or she has no expertise in networks.

If the network diagnostic program is stored in a computer-readable storage medium, the same advantages as with the present embodiment can be obtained only by installing this program in an ordinary computer through the recording medium.

## Claims

1. An information processing apparatus including a network device (107, 108) configured to be connectable to a network, the apparatus **characterized by** comprising:
means for displaying a connection diagram showing a connection between the network device (107, 108) and the network on a display device (121) of the information processing apparatus;
means for performing a diagnosis of a network connection of the network device (107, 108);
means for displaying a portion of the network connection where a problem of the network connection is detected by the diagnosis on the connection diagram; and
means for displaying a message to indicate a solution to the detected problem on the display device (121).

2. The information processing apparatus according to claim 1, **characterized in that** the message displaying means includes means for displaying a message and a button to initialize the network device (107, 108) on the display device (121) when a problem that the network device (107, 108) is not connected to the network is detected by the diagnosis, and
the information processing apparatus further comprises means for initializing the network device (107, 108) in response to an operation of the button.

3. The information processing apparatus according to claim 1, **characterized in that** the network device (107, 108) includes a wireless network device (108) configured to perform wireless communication, the information processing apparatus further comprises an operation switch (17) to switch the wireless network device (108) between an operating state and a nonoperating state, and the diagnosis performing means includes means for determining which of the operating state and the nonoperating state is selected to set the wireless network device (108) by the operation switch (17).

4. The information processing apparatus according to claim 3, **characterized in that** the message displaying means includes means for displaying a message to switch the wireless network device (108) to the operating state by the operation switch (17) on the display device (121) when it is determined that the wireless network device (108) is set in the nonoperating state.

5. The information processing apparatus according to claim 3, **characterized in that** the message displaying means includes means for displaying a message and a button to switch the wireless network device (108) to the operating state by the operation switch (17) on the display device (121) when it is determined that the wireless network device (108) is set in the nonoperating state, and
the information processing apparatus further comprises means for switching the wireless network device (108) to the operating state in response to an operation of the button.

6. The information processing apparatus according to claim 1, **characterized in that** the diagnosis performing means includes means for determining whether the network device (107, 108) is connected to the network and means for determining whether the apparatus is communicable to a remote host on the network when it is detected that the network device (107, 108) is connected to the network.

7. The information processing apparatus according to claim 1, **characterized in that** the network device (107, 108) includes a wireless network device (108) configured to perform wireless communication, and
the information processing apparatus further comprises means for displaying, on the connection diagram, information indicating whether an encryption key to encrypt data transferred between the wireless network device (108) and the network is set in the network device (108).

8. The information processing apparatus according to claim 1, **characterized in that** the message displaying means includes means for displaying a message to indicate a solution to the detected problem on the display device (121) with reference to information that defines solutions of different problems that are predetermined for the network connection of the network device (107, 108).

9. A method of solving problems of network connection of an information processing apparatus including a network device (107, 108) configured to be connectable to a network, the method **characterized by** comprising:
displaying (S101) a connection diagram showing a connection between the network device (107, 108) and the network on a display device (121) of the information processing apparatus;
performing (S102) a diagnosis of a network connection of the network device (107, 108);
displaying (S104) a portion of the network connection where a problem of the network connection is detected by the diagnosis, on the connection diagram; and
displaying (S106) a message to indicate a solution to the detected problem on the display device (121).

10. The method according to claim 9, **characterized in that** the message displaying (S106) includes displaying a message and a button to initialize the network device (107, 108) on the display device (121) when a problem that the network device (107, 108) is not connected to the network is detected by the diagnosis, and
the method further comprises initializing (S108) the network device (107, 108) in response to an operation of the button.

11. The method according to claim 9, **characterized in that** the network device (107, 108) includes a wireless network device (108) configured to perform wireless communication, the information processing apparatus includes an operation switch (17) to switch the wireless network device (108) between an operating state and a nonoperating state, and the diagnosis performing (S102) includes determining (S301, S302) which of the operating state and the nonoperating state is selected to set the wireless network device (108) by the operation switch (17).

12. The method according to claim 11, **characterized in that** the message displaying (S106) includes displaying a message to switch the wireless network device (108) to the operating state by the operation switch (17) on the display device (121) when it is determined that the wireless network device (108) is set in the nonoperating state.

13. The method according to claim 11, **characterized in that** the message displaying (S106) includes displaying a message and a button to switch the wireless network device (108) to the operating state by the operation switch (17) on the display device (121) when it is determined that the wireless network device (108) is set in the nonoperating state, and
the method further comprises switching (S108) the wireless network device (108) to the operating state in response to an operation of the button.

14. The method according to claim 9, **characterized in that** the diagnosis performing (S102) includes determining (S305) whether the network device (107, 108) is connected to the network and determining (S309) whether the apparatus is communicable to a remote host on the network when it is detected that the network device (107, 108) is connected to the network.

15. The method according to claim 9, **characterized in that** the network device (107, 108) includes a wireless network device (108) configured to perform wireless communication, and
the method further comprises displaying, on the connection diagram, information indicating whether an encryption key to encrypt data transferred between the wireless network device (108) and the network is set in the network device (108).

16. The method according to claim 9, **characterized in that** the message displaying (S106) includes displaying a message to indicate a solution to the detected problem on the display device (121) with reference to information that defines solutions of different problems that are predetermined for the network connection of the network device (107, 108).
